# EUROPEAN PATENT APPLICATION

(11) **EP 4 647 209 A1**
(43) Date of publication of application: **12.11.2025**
(21) Application number: 25175187.1
(22) Date of filing: 08.05.2025
(51) Int. Cl.: B23P 15/00, B21K 1/16, F16L 41/02, G05B 19/18

(54) **METHOD FOR MAKING HYDRAULIC CONNECTIONS**

(30) Priority: 09.05.2024 IT 202400010525
(71) Applicant: Ellis Engineering S.r.l., 32030 Fonzaso (BL) (IT)
(72) Inventor: COMUNELLO, Franco, 36022 Cassola (VI) (IT)
(74) Representative: Gallo, Luca

(57) **Abstract**

Method for producing a hydraulic connector (1), which provides for a first design step, in which a first design (2) is attained in digital format of two or more hydraulic connectors (1), each of which is provided with a through hole (5) extended along the main extension axis (X) thereof and a first external surface (6). Furthermore, the method provides for a superimposition step, in which the first designs (2) in digital format of the hydraulic connectors (1) are superimposed so that the through holes (5) are coinciding, and a second design step, in which a second design (7) in digital format is attained of a semifinished product (8), which is provided with the aforesaid through hole (5) and a second external surface (11) which circumscribes the first external surfaces (6) of the hydraulic connectors (1) represented in the superimposed first designs (2) in digital format. Furthermore, the method comprises a step of arranging a solid body (12) made of metallic material having a third external surface (15) thereof and a first processing step, in which the solid body (12) is subjected to a succession of cold forming operations to obtain the semifinished product (8), making the through hole (5) and shaping this third external surface (15) in the second external surface (11) of the semifinished product (8) itself. The method also provides a selection step, in which a hydraulic connector (1) is selected from between the hydraulic connectors (1) represented in the first designs (2) in digital format, and a second processing step, in which the semifinished product (8) is subjected to a succession of material removal operations as a function of the hydraulic connector (1) selected in the selection step, in order to remove material starting from the second external surface (11) up to obtaining the first external surface (6) of the hydraulic connector (1) selected in the selection step between the two or more hydraulic connectors (1).

## Description

### Field of application

The present invention relates to a method for producing a hydraulic connector, according to the preamble of independent claim no. 1.

In more detail, the method in question is advantageously intended to be used in the field of the production of components for hydraulic systems, in order to make hydraulic connectors, in particular female hydraulic connectors.

Furthermore, the hydraulic connector obtained by means of the aforesaid method in question can be advantageously used to connect a pipe, for example a flexible pipe, to another pipe or to a fluid passage mouth of a device forming part of a hydraulic system.

### State of the art

In the field of hydraulic systems, it is known the use of hydraulic connectors, passed through internally by a through hole for the passage of fluid and provided with at least a first portion capable of being inserted into a pipe (for example flexible) and an opposite second portion shaped so as to, for example, be able to connect to a fluid passage mouth of a device forming part of a hydraulic system or to a connector present at the end of another pipe and the like.

In more detail, the method for producing hydraulic connectors, which is normally used in the state of the art, envisages subjecting drawn bars in metallic material to shaving removal operations to obtain the finished product.

In particular, this drawn bar is subjected to drilling, to be able to obtain the through hole which in use will be passed through by the fluid, and to turning on the external surface, so as to be able to shape the portion intended to be inserted into the pipe and the opposite portion capable of being connected to a corresponding fluid passage mouth or to a corresponding connector.

However, the known method for producing hydraulic connectors has in practice proven to be not free from drawbacks.

The main drawback of the known method is that there is currently a multitude of hydraulic connectors whose shape differs for a variety of possible reasons, such as the requirements imposed by the standards of the different geographical areas where the hydraulic connectors will be marketed, the pressure at which the hydraulic connectors must be able to work without causing fluid leaks or disconnection from the pipe, or the particular industrial sector in which the hydraulic connectors themselves will be used (for example, the hydraulic connectors used to connect pipes and devices of a refrigeration system have a different shape from those used in a hydraulic system for the operation of the tools of an agricultural machine). Therefore, in order for a company specialized in the production of hydraulic connectors to be able to produce a variety of different product codes of connectors as a function of the different market demands, it will be necessary to keep in stock a number of semifinished product codes of drawn bars identical to the number of product codes of the connectors which it is desired to produce, since each starting drawn bar must have a length and diameter selected specifically for the corresponding finished hydraulic connector. However, a high number of product codes for hydraulic connectors therefore entails a high number of semifinished product codes for drawn bars and, consequently, extremely high warehouse management costs.

A further drawback lies in the fact that the drawn bars have a cylindrical shape and, therefore, during the production of a hydraulic connector which necessarily has different diameters along the extension thereof (the portion capable of being inserted into a pipe normally has smaller dimensions with respect to those of the portion shaped to be connected to a connector or to a fluid passage mouth of a hydraulic device), a large quantity of material will have to be removed from the bar, thus forming a large quantity of waste material in the form of shavings.

Another drawback of the known method is that it is necessary to subject the drawn bar to drilling in order to make the through hole capable of being passed through by the fluid and this means that the through hole will have dimensional and geometric tolerances which are not very precise, in particular for small diameters, such as 4 mm.

### Presentation of the invention

**In** this situation, the problem underlying the present invention is therefore that of overcoming the drawbacks manifested by the known solutions discussed above, by providing a method for producing a hydraulic connector, which allows to rationalize the warehouse stock of the initial pieces from which the finished hydraulic connectors are obtained.

A further object of the present invention is to provide a method for producing a hydraulic connector, which allows obtaining more precise dimensional and geometric tolerances of the hydraulic connectors.

A further object of the present invention is to provide a method for producing a hydraulic connector which allows reducing material waste.

A further object of the present invention is to provide a method for producing a hydraulic connector which is simple and economical.

A further object of the present invention is to provide a method for producing a hydraulic connector which is operationally completely reliable.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:

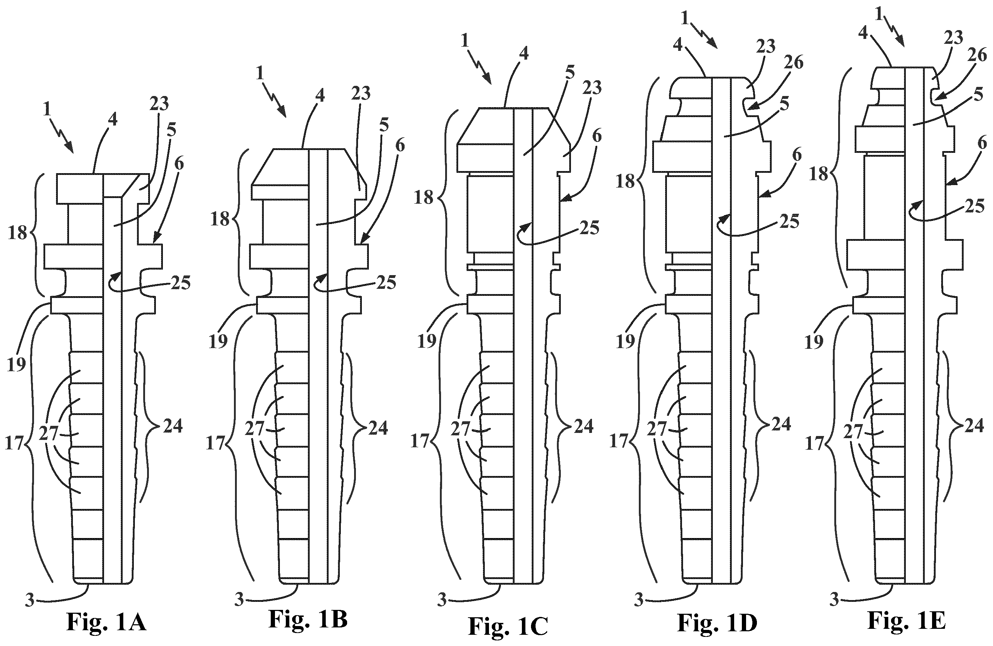

- Figures 1A to 1E show partial lateral section side views of different hydraulic connectors which can be produced using the method of the present invention starting from the same semifinished product;

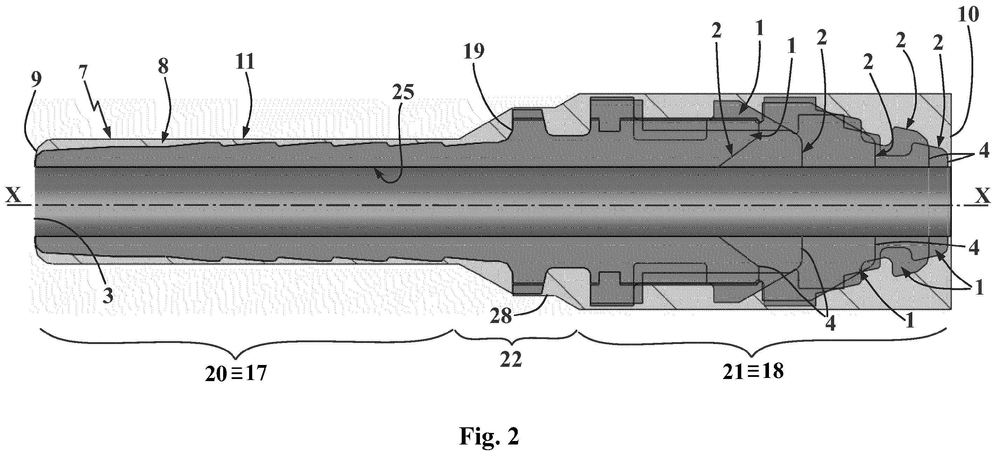

- Figure 2 shows a second design in digital format of a semifinished product - from which it is possible to obtain any of the hydraulic connectors of Figures 1A to 1E by means of the method of the present invention - whose second external surface circumscribes first external surfaces of the hydraulic connectors represented in corresponding superimposed first designs in digital format;

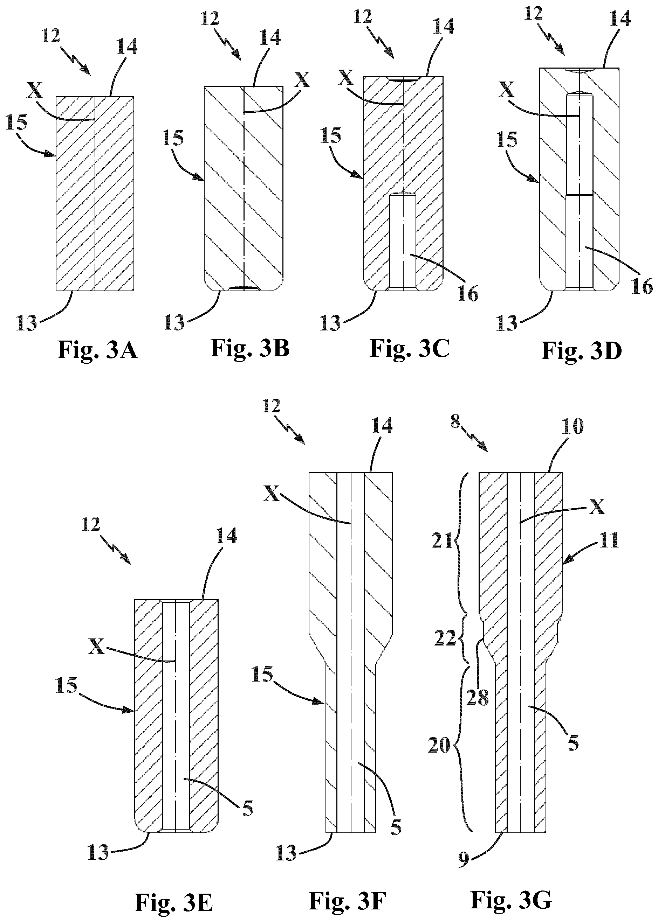

- Figure 3A shows a lateral sectional view of a solid body from which it is possible to obtain - by means of a succession of cold forming operations of a first processing step of the method of the present invention - the semifinished product of the second design in digital format represented in Figure 2;
- Figures 3B to 3G show how the lateral section view of the body of Figure 3A evolves in sequence after each cold forming operation of the first processing step of the method of the present invention, until obtaining in Figure 3G the semifinished product whose second design in digital format is represented in Figure 2 (in which each of the aforesaid figures corresponds to a cold forming operation which may also be only optional and not necessary for obtaining the semifinished product).

### Detailed description of a preferred embodiment

With reference to the attached designs, the numeral 1 indicates a hydraulic connector obtainable by means of the method for producing a hydraulic connector 1 which is the subject matter of the present invention.

The method in question provides for a first design step, in which a first design 2 is attained in digital format of two or more hydraulic connectors 1.

Each of the aforesaid hydraulic connectors 1 is extended along a main extension axis X thereof between a first end 3 and an opposite second end 4 and is provided with a through hole 5, extended along the main extension axis X and opening at the first and second end 3, 4, and with a first external surface 6, which is extended around the main extension axis X between the first and second end 3, 4.

Advantageously, each of the hydraulic connectors 1 also comprises a first internal surface 25, which is extended around the main extension axis X between the first and second end 3, 4 to delimit the through hole 5.

In particular, the first external surface 6 of each hydraulic connector 1 differs from the first external surface 6 of each of the other hydraulic connectors 1, whose first design 2 in digital format is attained in the aforesaid first design step.

Further, the method in question provides for a superimposition step, in which the first designs 2 in digital format of the two or more hydraulic connectors 1 are superimposed in a manner such that the through holes 5 are coinciding.

In more detail, the through holes 5 of the different hydraulic connectors 1 represented in the corresponding first designs 2 in digital format are to be considered coinciding when they are at least partially superimposed on each other and have the main extension axes X thereof coinciding.

In particular, in order for the aforesaid through holes 5 to be considered coinciding, it is not necessary for the first ends 3 and/or the second ends 4 of each of the hydraulic connectors 1 represented in the first designs 2 in digital format to be coinciding (for example because each hydraulic connector 1 could have a length along the main extension axis X between the first and second end 3, 4 which is different from that of the other hydraulic connectors 1 and, therefore, consequently also the through holes 5 which open at the first and second end 3, 4 of the corresponding hydraulic connectors 1 could have different lengths therebetween).

Furthermore, the method of the invention comprises a second design step, in which a second design 7 in digital format is attained of a semifinished product 8, which is extended along the main extension axis X between a first termination 9 thereof and a second termination 10 thereof. The semifinished product 8 is provided with the aforesaid through hole 5, which is extended along the main extension axis X and opens at the first and second termination 9, 10, and with a second external surface 11, which is extended around the main extension axis X between the first and second termination 9, 10 and circumscribes the first external surfaces 6 of the hydraulic connectors 1 represented superimposed in the first designs 2 in digital format.

Advantageously, the expression "circumscribes" means that the second external surface 11 of the semifinished product 8 represented in the second design 7 in digital format has one or more segments in common with at least some (preferably most of) the first external surfaces 6 of the hydraulic connectors 1 represented in the first designs 2 in digital format.

Thereby, by means of the first design step, the superimposition step and the second design step it was possible to define a semifinished product 8 adapted to be processed by material removal (as better described below) in order to obtain any of the different hydraulic connectors 1 whose first designs 2 in digital format were superimposed. This semifinished product 8 therefore allows rationalizing the warehouse stock required to produce many different types of hydraulic connectors 1, by simply keeping only one type of semifinished product 8 in stock for producing many different hydraulic connectors 1. By means of the method according to the invention, it is therefore not necessary to keep an initial piece in stock to be processed for each type of hydraulic connector 1 to be produced.

The method in question further comprises a step of arranging a solid body 12, made of metallic material, which is extended along the main extension axis X between a first base 13 thereof and an opposite second base 14 and has a third external surface 15 extended around the main extension axis X between the first and second base 13, 14.

In more detail, solid body 12 is intended as a body 12 without through holes 5. In particular, when the body 12 has been subjected to some of the cold forming operations which have made the through hole 5 and still has to be subjected to the remaining cold forming operations which shape the third external surface 15 thereof to obtain the second external surface 11 of the semifinished product 8, reference will be made to the body 12 without using the adjective "solid".

The method in question further provides for a first processing step, in which the body 12 is subjected to a succession of cold forming operations in order to obtain the semifinished product 8 (advantageously represented in the second design 2 in digital format), making the through hole 5 and shaping the third external surface 15, - extended around the main extension axis X between the first and second base 13, 14 - in order to obtain the second external surface 11, extended around the main extension axis X between the first and second termination 9, 10.

In order to attain the through hole 5 without subjecting the molds used in the cold forming operations to excessive mechanical stresses, at least some of the cold forming operations of the succession of cold forming operations executed during the first processing step advantageously impart a blind hole 16 on the body 12 starting from one among the first and second base 13, 14 and render the aforesaid blind hole 16 progressively deeper along the main extension axis X up to reaching the other between the first and second base 13, 14 and thus obtain the through hole 5. The method in question further comprises a selection step, in which a hydraulic connector 1 is selected from between the two or more hydraulic connectors 1 represented in the first designs 2 in digital format.

The method in question further comprises a second processing step, in which the semifinished product 8 is subjected, particularly in an automated manner, to a succession of material removal operations as a function of the hydraulic connector 1 selected in the selection step between the two or more hydraulic connectors 1, to remove material starting from at least part of the second external surface 11 - extended around the main extension axis X between the first and second termination 9, 10 - up to obtaining at least part of the first external surface 6 - extended around the main extension axis X between the first and second end 3, 4 - of the hydraulic connector 1 selected in the selection step between the two or more hydraulic connectors 1.

Advantageously, in the second processing step, the semifinished product 8 is subjected to a succession of material removal operations as a function of the hydraulic connector 1 selected in the selection step from between the two or more hydraulic connectors 1, to remove material starting from the second external surface 11 - extended around the main extension axis X between the first and second termination 9, 10 - up to obtaining the first external surface 6 - extended around the main extension axis X between the first and second end 3, 4 - of the hydraulic connector 1 selected in the selection step between the two or more hydraulic connectors 1.

Thereby, at the end of the second processing step it is possible to obtain a substantially finished hydraulic connector 1 (except for an optional fourth processing step introduced below and arranged to render the main extension axis X from straight to curved), in particular if the hydraulic connector 1 is of the female type (better described below).

Alternatively, without departing from the scope of protection of the present invention, if the hydraulic connector 1 is provided with a threaded section on a part of the first external surface 6 thereof, it is possible that the material removal operations of the second processing step remove material only from a part of the second external surface 11 and that the method comprises a subsequent third processing step in which the aforesaid threaded section is obtained by means of a rolling operation, in particular executed on a part of the second external surface 11 which has not been subjected to the material removal operations (as better described below).

By means of the method according to the invention it is therefore advantageously possible to make a plurality of different hydraulic connectors 1 by always subjecting the same type of semifinished product 8 to a succession of material removal operations calibrated as a function of the particular hydraulic connector 1 selected during the selection step (obtaining, as stated above, a notable rationalization of the warehouse stock of the pieces used to obtain the hydraulic connectors 1).

The method in question also advantageously allows obtaining hydraulic connectors 1 with particularly precise dimensional and/or geometric tolerances, since the through hole 5 is made on the semifinished product 8 by means of cold forming operations (rather than by means of a drilling operation as occurs in the prior art). Thereby, it is possible to make hydraulic connectors 1 with precise dimensional and/or geometric tolerances even when the through hole 5 has a particularly small diameter, such as in the case where the diameter is around 4 mm.

Furthermore, the fact that the through hole 5 is obtained by means of the cold forming operations of the first processing step also advantageously leads to a reduction in material waste (with respect to the prior art which involves a drilling operation, i.e. a machining process by shaving removal).

Advantageously, in the superimposition step, the first designs 2 in digital format of the two or more hydraulic connectors 1 are superimposed in a manner such that the first ends 3 are coinciding.

Thereby, the material waste produced during the second processing step is reduced as much as possible, as the overall length along the main extension axis X of the second design 7 in digital format of the semifinished product 8 can be reduced and therefore also the quantity of material which must be removed from the semifinished product 8 to obtain the selected hydraulic connector 1.

Preferably, the first termination 9 of the semifinished product 8 represented in the second design 7 in digital format coincides with the first ends 3 of the hydraulic connectors 1 represented in the superimposed first designs 2 in digital format, precisely for the purpose of reducing the overall length of the semifinished product 8 along the main extension axis X.

Furthermore, the hydraulic connectors 1 can have, for example, different lengths along the main extension axis X between the first and second end 3, 4 and, in this case, preferably, the second termination 10 of the semifinished product 8 represented in the second design 7 in digital format coincides with the second end 4 of the hydraulic connector 1 having greater length along the main extension axis X between the hydraulic connectors 1 represented in the superimposed first designs 2 in digital format.

Furthermore, the solid body 12 has constant section between the first and second base 13, 14 along the main extension axis X, before being subjected to the succession of cold forming operations of the first processing step.

Preferably, the solid body 12 has a cylindrical or possibly prismatic shape, before being subjected to the succession of cold forming operations of the first processing step.

In particular, the fact that the solid body 12 has a constant section, before being subjected to the succession of cold forming operations of the first processing step, means that it is possible to use a solid body 12 made by drawing, which is a particularly economical operation and which allows the use of a single code to store the same solid bodies 12 in the warehouse to be shaped as semifinished products 8.

Advantageously, in the second processing step, the material removal operations are executed by means of a machine comprising several operating stations, which are arranged in sequence and are each provided with at least one corresponding tool arranged to execute at least one respective material removal operation among the material removal operations of the second processing step, and automatic transfer means, which are arranged to transfer the semifinished product between the operating stations.

Preferably, the operating machine is provided with a loading station preceding the operating stations, at which the aforesaid operating machine is capable of receiving the semifinished product 8.

The operating machine is also preferably provided with an unloading station following the aforesaid operating stations, at which the operating machine is capable of unloading in particular the hydraulic connector 1 selected during the selection step and obtained from the semifinished product 8, subjecting it to the succession of material removal operations of the second processing step.

Furthermore, the operating machine can be of linear type (i.e., in particular with the operating stations arranged in sequence along a straight or broken line and with the automatic transfer means comprising a transfer pallet arranged to move from one operating station to another) or of rotary type (i.e., in particular with the operating stations arranged around a reference circumference and with the transfer means provided with a rotating carousel placed to intercept the aforesaid operating stations).

Advantageously, the material removal operations executed during the second operating step are turning operations (e.g. cut-turning, plunge turning, and the like), which can involve either the semifinished product 8 being held in position while the tool acts thereon or the semifinished product 8 being rotated against the tool in a fixed position.

In particular, the use in the method in question of a semifinished product 8 common to many different types of hydraulic connectors 1 makes the positioning of the semifinished product 8 in the operating machine particularly simple, as it is possible to always use the same setup to introduce the semifinished product 8 into the loading station regardless of the type of hydraulic connector 1 to be produced.

Furthermore, the operating machine advantageously comprises an electronic control unit configured to store in memory a succession of material removal operations as a function of each hydraulic connector 1 selectable in the selection step.

Furthermore, this electronic control unit is also advantageously configured to command the tools of the operating stations to execute the succession of material removal operations as a function of the hydraulic connector 1 selected between the two or more hydraulic connectors 1 in the selection step.

The operating machine also advantageously comprises an input device operationally connected to the electronic control unit and configured to allow (for example a user) to select a hydraulic connector 1 from between the two or more hydraulic connectors 1, so that in particular the electronic control unit can command the tools of the operating stations to execute the particular succession of material removal operations specifically calibrated to obtain - starting from the semifinished product 8 common to several hydraulic connectors 1 - the aforesaid hydraulic connector 1 selected during the selection step.

In more detail, the input device comprises a monitor and a keypad integrated into the operating machine itself and/or a remote communication module (e.g., wi-fi) capable of being placed in data communication with a PC station, through which the user can select the hydraulic connector 1 to be produced.

In particular, the method in question is made considerably flexible by the use of a semifinished product 8 common to many different hydraulic connectors 1 and advantageously by the use of a machine tool with an electronic control unit which has a specific succession of material removal operations saved in its memory for each hydraulic connector 1, as it is possible to switch from the production of one type of hydraulic connector 1 to the production of a different type of hydraulic connector 1, automatically and without modifying any setup.

Each hydraulic connector 1 of the two or more hydraulic connectors 1 is advantageously provided with a first connection portion 17, which terminates at the first end 3, and with a second connection portion 18, which terminates at the second end 4 and in at least one part thereof has section, on a plane orthogonal to the main extension axis X, greater than that of the first connection portion 17.

Furthermore, each aforesaid hydraulic connector 1 advantageously comprises an abutment shoulder 19, which is interposed between the first and second connection portion 17, 18 and has section, on a plane orthogonal to the main extension axis X, at least greater than that of the first connection portion 17.

In more detail, the first connection portion 17 (which has section, on a plane orthogonal to the main extension axis X, smaller than that of the abutment shoulder 19 and at least a part of the second connection portion 18) is capable of being inserted into a pipe (for example flexible) which must be placed in fluid connection with a fluid passage mouth (for example belonging to a device forming part of a hydraulic device).

Furthermore, the abutment shoulder 19 is preferably capable of receiving in abutment the pipe into which the first connection portion 17 can be inserted.

The second connection portion 18 is also preferably shaped with one or more retention shoulders 23 and/or with one or more circumferential grooves 26. In particular, such one or more retention shoulders 23 and/or one or more circumferential grooves 26 are capable of being mechanically connected in a removable manner to an automatic coupling-uncoupling mechanism of the fluid passage mouth which is to be placed in fluid connection with the pipe in which the first connection portion 17 is capable of being inserted. Alternatively, one of the one or more circumferential grooves 26 retains a tightening nut in a rotatable manner around the main extension axis X, which tightening nut is provided with an at least partially threaded through opening and with a coupling shoulder protruding internally in said through opening and inserted into the aforesaid circumferential groove (in this case the hydraulic connector 1 is a female hydraulic connector capable of being mechanically connected to an externally threaded tubular element of the fluid passage mouth).

Advantageously, the method in question provides that, in the first processing step, at least one of the cold forming operations of the succession of cold forming operations shapes the semifinished product 8 with a narrow portion 20, with an enlarged portion 21 and with a connector portion 22. In more detail, the narrow portion 20 terminates at the first termination 9. In particular, at the narrow portion 20, the second external surface 11 on the second design 7 in digital format circumscribes the first external surface 6 at the first connection portion 17 of the hydraulic connectors 1 represented in the superimposed first designs 2 in digital format.

Furthermore, in more detail, the enlarged portion 21 terminates at the second termination 10 and has section, on a plane orthogonal to the main extension axis X, larger than that of the narrow portion 20. In particular, at the enlarged portion 21, the second external surface 11 on the second design 7 in digital format circumscribes the first external surface 6 at the second connection portion 18 of the hydraulic connectors 1 represented in the superimposed first designs 2 in digital format.

Furthermore, in more detail, the connector portion 22 is interposed between the narrow portion 20 and the enlarged portion 21 and has section, on a plane orthogonal to the main extension axis X, increasing from the narrow portion 20 to the enlarged portion 21.

In particular, at the connector portion 22, the second external surface 11 on the second design 7 in digital format circumscribes the first external surface 6 at at least the abutment shoulder 19 of said hydraulic connectors 1 represented in said superimposed first designs 2 in digital format.

In essence, the narrow portion 20 of the semifinished product 8 advantageously corresponds to the first connection portion 17 of the hydraulic connectors 1, the enlarged portion 21 of the semifinished product 8 advantageously corresponds to the second connection portion 18 of the hydraulic connectors 1 and the connector portion 22 of the semifinished product 8 advantageously corresponds to the abutment shoulder 19 of the hydraulic connectors 1.

In accordance with the preferred embodiment illustrated in the attached figures, the connector portion 22 has section, on a plane orthogonal to the main extension axis X, which increases from the narrow portion 20 to the enlarged portion 21 forming at least one step 28, in particular in a portion of the second external surface 11 at which the abutment shoulder 19 will be made following the succession of material removal operations executed in the second processing step. Differently, in accordance with an embodiment not illustrated in the attached figures, the connector portion 22 has section, on a plane orthogonal to the main extension axis X, which increases from the narrow portion 20 to the enlarged portion 21 in a monotonous manner. Preferably, in the second processing step, at least one of the material removal operations of the succession of material removal operations removes material starting from the second external surface 11 at the narrow portion 20 up to obtaining the first external surface 6 at the first connection portion 17 of the hydraulic connector 1 selected in the selection step between the two or more hydraulic connectors 1.

Furthermore, in the second processing step, at least one of the material removal operations of the succession of material removal operations preferably removes material starting from the second external surface 11 at the enlarged portion 21 up to obtaining the first external surface 6 at the second connection portion 18 of the hydraulic connector 1 selected in the selection step between the two or more hydraulic connectors 1.

Furthermore, in the second processing step, at least one of the material removal operations of the succession of material removal operations removes material starting from the second external surface 11 at the connector portion 22 up to obtaining the first external surface 6 at the abutment shoulder 19 of the hydraulic connector 1 selected in the selection step between the two or more hydraulic connectors 1.

Advantageously, each hydraulic connector 1 is provided with a retention shoulder 23 arranged on the second connection portion 18 adjacent to the second end 4.

Preferably, at least one of the material removal operations executed during the second processing step removes material from the semifinished product 8 starting from the second external surface 11 at the enlarged portion 21 up to obtaining the first external surface 6 at the second connection portion 18 with the retention shoulder 23 of the hydraulic connector 1 selected in the selection step between the two or more hydraulic connectors 1.

In particular, such a retention shoulder 23 is capable of being mechanically connected in a removable manner to an automatic coupling-uncoupling mechanism of a fluid passage mouth and/or delimits a circumferential groove 26 in which the coupling shoulder of a tightening nut is inserted.

Furthermore, each hydraulic connector 1 is advantageously provided with a barbed connection section 24 extended along at least part of the first connection portion 17.

Preferably, the barbed connection section 24 is provided with a plurality of retention teeth 27 arranged in sequence adjacent to each other along at least part of the first connection portion 17 and having a substantially truncated conical shape with a smaller base 28 facing the first end 3 and a larger base 29 facing the second end 4.

In more detail, the barbed connection section 24 (in particular by means of the retention teeth 27) is capable of gripping the internal surface of the preferably flexible pipe into which the first connection portion 17 is inserted, in particular when a ring nut is closed around the pipe (for example by crimping) so as to press the internal surface of the pipe itself against the barbed connection section 24.

Preferably, at least one of the material removal operations executed during the second processing step removes material starting from the second external surface 11 at the narrow portion 20 up to obtaining the first external surface 6 at the first connection portion 17 with the barbed connection section 24 of the hydraulic connector 1 selected in the selection step between the two or more hydraulic connectors 1.

Alternatively, in accordance with an embodiment not illustrated in the attached figures, one or more of the two or more hydraulic connectors 1 is advantageously provided with a threaded section extended along at least part of the first connection portion 17.

In such a case, at least one of the material removal operations executed during the second processing step preferably removes material starting from the second external surface 11 at the narrow portion 20 up to obtaining the first external surface 6 at the first connection portion 17 with the threaded section of the hydraulic connector 1 selected in the selection step between the two or more hydraulic connectors 1.

Eventually, if one or more of the hydraulic connectors 1 which can be selected during the selection step is advantageously provided with the threaded section extended along at least part of the first connection portion 17, the method in question can be provided with a third processing step following the second processing step, in which a rolling operation is executed on the second external surface 11 at the narrow portion 20 up to obtaining the first external surface 6 at the first connection portion 7 with the threaded section of the hydraulic connector 1 selected during the selection step.

Therefore, in particular, this third processing step is proposed as an alternative to the at least one material removal operation arranged to remove material starting from the second external surface 11 at the narrow portion 20 until obtaining the first external surface 6 at the first connection portion 17 with the threaded section of the hydraulic connector 1 selected in the selection step between the two or more hydraulic connectors 1. In this case, therefore, the material removal operations of the second processing step advantageously remove material starting from the second external surface 11 only at the enlarged portion 21 and the connector portion 22. Advantageously, the metallic material (with which the body 12 is made and therefore also the semifinished product 8 and the hydraulic connectors 1) is a steel lacking lead, with low carbon content.

Preferably, low carbon content is intended as steel with a carbon content substantially comprised between 0.02% and 0.06% of the total weight.

In particular, the fact that the steel is lead-free makes the metallic material more ductile and malleable and therefore easier to work with by means of the cold forming operations of the first processing step, without however running the risk that the shavings formed during the material removal operations of the second processing step could interfere with the correct operation of the tools. In fact, the use of a semifinished product 8 having the second external surface 11 which circumscribes the first external surfaces 6 of the superimposed hydraulic connectors 1 means that the quantity of material to be removed from the semifinished product 8 itself during the material removal operations is particularly small and therefore the shavings which form during these operations is also short (although the shavings are in turn ductile and malleable and therefore do not tend to break).

In accordance with the embodiments illustrated in the attached figures, the main extension axis X of the hydraulic connectors 1 is advantageously straight (and preferably therefore also the main extension axis X of the semifinished product 8 and of the solid body 12 is straight). Advantageously, if it is desired to produce a hydraulic connector 1 having a curved main extension axis X, the method in question comprises a fourth processing step following the second processing step (and possibly also following the third processing step if envisaged), in which fourth processing step the hydraulic connector 1 is subjected to at least one bending operation in which the main extension axis X is bent from straight to curved.

Therefore, the invention thus conceived achieves the pre-set objects.

## Claims

1. Method for producing a hydraulic connector (1), which provides for:
- a first design step, in which a first design (2) is attained in digital format of two or more hydraulic connectors (1), each of which is extended along a main extension axis (X) thereof between a first end (3) and an opposite second end (4) and is provided with:
- a through hole (5) extended along said main extension axis (X) and opening at said first and said second end (3, 4), and
- a first external surface (6), which is extended around said main extension axis (X) between said first and said second end (3, 4);
- a superimposition step, in which the first designs (2) in digital format of said two or more hydraulic connectors (1) are superimposed in a manner such that the through holes (5) are coinciding;
- a second design step, in which a second design (7) in digital format is attained of a semifinished product (8), which is extended along said main extension axis (X) between a first termination (9) thereof and a second termination (10) thereof and is provided with:
- said through hole (5), extended along said main extension axis (X) and opening at said first and said second termination (9, 10), and
- a second external surface (11), which is extended around said main extension axis (X) between said first and said second termination (9, 10) and circumscribes the first external surfaces (6) of said hydraulic connectors (1) represented in said superimposed first designs (2) in digital format;
- a step of arranging a solid body (12), made of metallic material, which is extended along said main extension axis (X) between a first base (13) thereof and an opposite second base (14) and has a third external surface (15) extended around said main extension axis (X) between said first and said second base (13, 14);
- a first processing step, in which said solid body (12) is subjected to a succession of cold forming operations in order to obtain said semifinished product (8), making said through hole (5) and shaping said third external surface (15), extended around said main extension axis (X) between said first and said second base (13, 14), in order to obtain said second external surface (11), extended around said main extension axis (X) between said first and said second termination (9, 10);
- a selection step, in which a hydraulic connector (1) is selected from between said two or more hydraulic connectors (1) represented in said first designs (2) in digital format;
- a second processing step, in which said semifinished product (8) is subjected to a succession of material removal operations as a function of the hydraulic connector (1) selected in said selection step between said two or more hydraulic connectors (1), in order to remove material starting from at least part of said second external surface (11), extended around said main extension axis (X) between said first and said second termination (9, 10), up to obtaining at least part of the first external surface (6), extended around said main extension axis (X) between said first and said second end (3, 4), of said hydraulic connector (1) selected in said selection step between said two or more hydraulic connectors (1).

2. Method according to claim 1, **characterized in that**, in said superimposition step, the first designs (2) in digital format of said two or more hydraulic connectors (1) are superimposed in a manner such that the first ends (3) are coinciding.

3. Method according to claim 1 or 2, **characterized in that** said solid body (12) has constant section between said first and said second base (12, 13) along said main extension axis (X), before being subjected to the succession of cold forming operations of said first processing step.

4. Method according to any one of the preceding claims, **characterized in that**, in said second processing step, said material removal operations are executed by means of an operating machine comprising:
- multiple operating stations placed in sequence and each provided with at least one corresponding tool arranged for executing at least one respective material removal operation from among the material removal operations of said second processing step;
- automatic transfer means arranged for transferring said semifinished product between said operating stations.

5. Method according to claim 4, **characterized in that** said operating machine comprises:
- an electronic control unit configured for:
- carrying, saved in a memory, one said succession of material removal operations as a function of each hydraulic connector (1) selectable in said selection step, and
- commanding the tools of said operating stations to execute said sequence of material removal operations as a function of the hydraulic connector (1) selected from among said two or more hydraulic connectors (1) in said selection step;
- an input device operatively connected to said electronic control unit and configured for allowing the selection of a hydraulic connector (1) between said two or more hydraulic connectors (1).

6. Method according to any one of the preceding claims, **characterized in that** at least some of the cold forming operations of said succession of cold forming operations executed during said first processing step impart a blind hole (16) on said body (12) starting from one from among said first and second base (13, 14) and render said blind hole (16) progressively deeper along said main extension axis (X) up to reaching the other between said first and second base (13, 14) and obtaining said through hole (5).

7. Method according to any one of the preceding claims, **characterized in that** each hydraulic connector (1) of said two or more hydraulic connectors (1) is provided with:
- a first connection portion (17), which terminates at said first end (3);
- a second connection portion (18), which terminates at said second end (4) and in at least one part thereof has section, on a plane orthogonal to said main extension axis (X), greater than that of said first connection portion (17);
- an abutment shoulder (19), which is interposed between said first and said second connection portion (17, 18) and has section, on a plane orthogonal to said main extension axis (X), at least greater than that of said first connection portion (17);
in said first processing step, at least one of the cold forming operations of said succession of cold forming operations shaping said semifinished product with:
- a narrow portion (20), which terminates at said first termination (9); at said narrow portion (20), said second external surface (11) on said second design (7) in digital format circumscribes the first external surface (6) at the first connection portion (17) of said hydraulic connectors (1) represented in said superimposed first designs (2) in digital format;
- an enlarged portion (21), which terminates at said second termination (10) and has section, on a plane orthogonal to said main extension axis (X), greater than that of the narrow portion (20); at said enlarged portion (21), said second external surface (11) on said second design (7) in digital format circumscribes the first external surface (6) at the second connection portion (18) of said hydraulic connectors (1) represented in said superimposed first designs (2) in digital format;
- a connector portion (22), which is interposed between said narrow portion (20) and said enlarged portion (21) and has section, on a plane orthogonal to said main extension axis (X), increasing from said narrow portion (20) to said enlarged portion (21); at said connector portion (22), said second external surface (11) on said second design (7) in digital format circumscribes the first external surface (6) at least at the abutment shoulder (19) of said hydraulic connectors (1) represented in said superimposed first designs (2) in digital format.

8. Method according to claim 7, **characterized in that** each said hydraulic connector (1) is provided with a retention shoulder (23) placed on said second connection portion (18) adjacent to said second end (4);
at least one of the material removal operations executed during said second processing step, removing material from said semifinished product (8) starting from said second external surface (11) at said enlarged portion (21) up to obtaining the first external surface (6) at the second connection portion (18) with the retention shoulder (23) of the hydraulic connector (1) selected in said selection step between said two or more hydraulic connectors (1).

9. Method according to claim 7 or 8, **characterized in that** each said hydraulic connector (1) is provided with a barbed connection section (24) extended along at least part of said first connection portion (17);
at least one of the material removal operations, executed during said second processing step, removing material starting from said second external surface (11) at said narrow portion (20) up to obtaining the first external surface (6) at the first connection portion (17) with the barbed connection section (24) of the hydraulic connector (1) selected in said selection step between said two or more hydraulic connectors (1).

10. Method according to any one of the preceding claims, **characterized in that** said metallic material is a steel lacking lead, with low carbon content.
